# EUROPÄISCHE PATENTSCHRIFT

(11) **EP 2 904 278 B1**
(45) Veröffentlichungstag und Bekanntmachung des Hinweises auf die Patenterteilung: **19.04.2017**
(21) Anmeldenummer: 13756504.0
(22) Anmeldetag: 04.09.2013
(51) Int. Cl.: F16B 7/04, F16B 21/06, F16B 21/07, F16B 21/18, F16B 5/02, F16B 31/02

(54) **VERSCHLUSSBOLZEN UND VERSCHLUSSELEMENT HIERMIT**
FASTENER BOLT AND FASTENER ELEMENT HAVING THE SAME
BOULON DE BLOCAGE ET ÉLEMENT DE BLOCAGE ASSOCIÉ

(30) Priorität: 04.10.2012 DE 202012009468 U
(43) Veröffentlichungstag der Anmeldung: 12.08.2015
(73) Patentinhaber: Fairchild Fasteners Europe - Camloc GmbH, 65779 Kelkheim (Taunus) (DE)
(72) Erfinder: BLANCKE, Stefan, 65779 Kelkheim (DE)
(74) Vertreter: Keil & Schaafhausen Patent- und Rechtsanwälte PartGmbB
(86) Internationale Anmeldenummer: PCT/EP2013/068306
(87) Internationale Veröffentlichungsnummer: WO 2014/053280

(56) Entgegenhaltungen:
- EP-A1- 2 439 418

## Beschreibung

Die Erfindung betrifft einen Verschlussbolzen, der bspw. wie eine Schraube verwendet werden kann, sowie ein Verschlusselement hiermit. Das Verschlusselement kann zur Verbindung von Bauteilen den Bolzen und ein mit diesem verbindbares Befestigungselement aufweisen.

Derartige Verschlusselemente sind beispielsweise als eine Schraube oder ein Schnellverschluss (z.B. 1/4 Drehverschluss wie aus der US 2,368,713 oder der US 2,378,122 bekannt, ein Schnellverschluss mit einer geteilten Mutter ähnlich der US 3,702,628 oder ein Ratschenverschluss ähnlich der DE 1 450 944) ausgebildet und haben die Aufgabe, zwei oder mehr Bauteile zusammenzuhalten bzw. aneinander zu befestigen. Die Bauteile weisen hierzu Durchgangsöffnungen auf, die miteinander in Überdeckung gebracht werden können, so dass der Bolzen durch die Durchgangsöffnungen geführt und mit dem Befestigungselement verbunden werden kann. Um die hierbei auftretende Spannkraft in die Bauteile zu übertragen, können an dem Kopf des Bolzens und/oder an dem Befestigungselement Unterlegscheiben vorgesehen sein, deren Außendurchmesser größer als der Innendurchmesser der jeweiligen Durchgangsöffnung ist.

In einigen Anwendungsfällen kann es erforderlich sein, eine bestimmte Vorspannung mit einem derartigen Verschlusselement zu erzeugen. Bei einigen Sicherheitsanwendungen ist dabei gefordert, dass die Vorspannkraft begrenzt wird. So soll bei Auftreten einer Kraft, die deutlich über der gewünschten Vorspannkraft liegt, eine Trennung der Bauteile erfolgen. Dabei wird es besonders bevorzugt, wenn die Bauteile sich schlagartig voneinander trennen.

Aus der DE 10 2009 038 644 A1 und der EP 2 410 189 A1 ist jeweils ein Dekompressionsverschluss bekannt, bei welchem ein Verschlussbolzen mit einer nutartigen Vertiefung an einem Ende versehen ist, die in einen federnden Rastverschluss eingreift, der sich auf einem der Bauteile abstützt. Bei Überschreiten einer bestimmten Axialkraft auf den Verschlussbolzen kommt das Rastelement mit der Vertiefung außer Eingriff, so dass sich der Verschluss selbsttätig löst. Der federnde Rastverschluss erfordert gegenüber herkömmlichen Verschlüssen einen erhöhten Bauraum, so dass diese Lösungen für einige Anwendungsfälle ungeeignet sind.

Aus der EP 2 439 418 A1 ist ein Bolzen zur Befestigung bspw. eines plattenartigen Bauteils bekannt, der aus zwei ineinander einsteckbaren Hülsen besteht. Die Hülsen verrasten ineinander, so dass sie drehfest und in axialer Richtung fest miteinander verbunden sind.

Es ist daher eine Aufgabe der vorliegenden Erfindung, einen kompakten Bolzen sowie ein Verschlusselement zu schaffen, die bei definierter Belastung schlagartig trennbar sind.

Diese Aufgabe wird erfindungsgemäß im Wesentlichen dadurch gelöst, dass bei einem Verschlussbolzen mit einem Zapfen, der Verriegelungsmittel, bspw. ein Gewinde oder dgl., und Rückhaltemittel, bspw. einen Bolzenkopf oder dgl., aufweist, der Zapfen wenigstens zwei separate Zapfenelemente aufweist, von denen eines die Verriegelungsmittel und das andere die Rückhaltemittel aufweist, wobei die wenigstens zwei Zapfenelemente drehfest und in axialer Richtung lösbar miteinander verbunden sind. Vorzugsweise sind die Zapfenelemente in axialer Richtung so lösbar miteinander verbunden, dass sie bei Überschreiten einer definierten, vorzugsweise auch durch Auswahl von Verbindungsmitteln oder deren Gestaltung einstellbaren, axialen Zugkraft, die auf die Zapfenelemente wirkt, insbesondere zerstörungsfrei, voneinander getrennt werden, wodurch auch die drehfeste Verbindung gelöst wird. Damit eignet sich der Verschlussbolzen beispielsweise für einen Dekompressionsverschluss eines Flugzeugs, welcher bei einer definierten axialen Belastung infolge eines schlagartigen Druckabfalls selbsttätig öffnen muss.

Mit anderen Worten kann der Zapfen durch die drehfeste Verbindung seiner beiden separaten Zapfenelemente wie ein gewöhnlicher Bolzenzapfen eingesetzt werden, d.h. es kann bspw. eine Gewindeverbindung gelöst oder festgezogen werden oder ein Drehverschluss kann geöffnet oder geschlossen werden. In dem axial unbelasteten Zustand des Zapfens sind die beiden Zapfenelemente auch in axialer Richtung so miteinander verbunden, dass sich der aus wenigstens zwei Bauteilen bestehende Zapfen wie ein einstückiges Bauteil verhält. Der Zapfen eignet sich somit auch zur Übertragung einer - in einer Richtung begrenzten - Axialkraft. Erst bei Überschreiten einer bestimmten axialen Zugkraft lösen sich die beiden Zapfenelemente schlagartig voneinander.

Erfindungsgemäß sind die wenigstens zwei Zapfenelemente mittels einer lösbaren Klammer in axialer Richtung miteinander verbunden. Hierzu kann die Klammer derart mit den Zapfenelementen verbunden sein, dass diese bei Überschreiten einer in axialer Richtung auf die wenigstens zwei Zapfenelemente wirkenden Kraft sich selbsttätig von wenigstens einem der Zapfenelemente löst. Damit trennt sich der Verschlussbolzen bei Erreichen einer vorbestimmbaren Axiallast schlagartig und selbsttätig.

Jedes der wenigstens zwei Zapfenelemente kann eine Nut aufweisen, in welche jeweils ein radial nach innen gerichteter Abschnitt der Klammer, bspw. ein Kragen oder ein Vorsprung, eingreift.

Zur drehfesten Verbindung weisen die wenigstens zwei Zapfenelemente jeweils nicht rotationssymmetrische Verbindungsbereiche auf. Dies kann bspw. mittels eines Mehrkantprofils oder mittels einer Stirnverzahnung erfolgen. Damit kann der Verschlussbolzen wie eine herkömmliche Schraube ein Drehmoment übertragen bzw. aufbringen.

Die Verriegelungsmittel des Verschlussbolzens können ein Gewinde oder einen Kreuzstift umfassen. Weiter kann zumindest eines der Zapfenelemente hohl ausgebildet sein.

Ein erfindungsgemäßes Verschlusselement zur Verbindung von Bauteilen kann einen solchen Verschlussbolzen und ein mit diesem verbindbares Befestigungselement aufweisen.

Ein Winkelausgleich zwischen den Rotationsachsen des Bolzens und dem Befestigungselement kann z.B. dadurch erreicht werden, dass der Kopf des Verschlussbolzens als eine Kalotte ausgebildet ist und sich an einer entsprechenden Gegenanlagefläche einer Scheibe schwenkbar abstützt. Vorzugsweise besteht das Verschlusselement aus einem Verschlussbolzen, der als eine Schraube mit einem Außengewinde versehen ist, und dem Befestigungselement, das eine Mutter mit einem Innengewinde ist.

Nach einer alternativen Ausführungsform ist das Verschlusselement beispielsweise als ein 1/4 Drehverschluss ausgebildet, wobei der Verschlussbolzen auf einer Seite einen Kopf und auf der gegenüberliegenden Seite einen Kreuzstift aufweisen kann. Das Befestigungselement kann dann eine Nockenkontur mit einer Rampe und einem gegenüber dieser zurückgesetzten Haltebereich ausgebildet sein. Weitere Befestigungsmöglichkeiten schließen eine bajonettartige Befestigung zwischen dem Bolzen und dem Befestigungselement ein.

Zur schnelleren Befestigung des Verschlussbolzens weist das Befestigungselement ein Gehäuse mit einem Konus und einer in dem Gehäuse aufgenommenen geteilten Mutter auf, wobei die Segmente der Mutter gegen die Kraft eines Federelements axial relativ zu dem Konus verschiebbar sind, um die Mutter radial aufzuweiten. Beim Anziehen der Schraube werden die Segmente der Mutter unterstützt durch das Federelement wieder gegen den Konus gedrückt, so dass die Muttersegmente wieder radial nach innen geführt werden, um die Gewindeverbindung mit dem Verschlussbolzen herzustellen.

Nach einer weiteren Ausführungsform weist der Bolzen auf einer Seite einen Kopf und auf der gegenüberliegenden Seite eine zentrale Öffnung mit einem Innengewinde auf, wobei das Befestigungselement ein Gehäuse mit einer darin drehfesten Haltenockenschraube mit Außengewinde und ggf. eine Ratschenanordnung umfasst. Die Ratschenanordnung kann dabei ähnlich der DE 1 450 944 federbelastet das Verschlusselement gegen ein ungewolltes Lösen der Gewindeverbindung sichern.

Die Erfindung wird nachfolgend anhand von Ausführungsbeispielen und unter Bezugnahme auf die Zeichnungen näher erläutert.

Es zeigen schematisch:
- Figur 1: in Perspektivansicht die Komponenten eines Verschlussbolzens nach einer ersten Ausführungsform der Erfindung,
- Figur 2: in Perspektivansicht den Verschlussbolzen nach Figur 1,
- Figur 3: in Schnittansicht den Verschlussbolzen nach Figur 1,
- Figur 4: vergrößert ein Detail aus Figur 3,
- Figur 5: in Schnittansicht ein Verschlusselement mit einem Verschlussbolzen nach Figur 1 in einem komprimierten Zustand,
- Figur 6: das Verschlusselement nach Figur 5 in einem nicht komprimierten Zustand,
- Figur 7: in Perspektivansicht die Klammer des Verschlussbolzens nach Figur 1,
- Figur 8: in Schnittansicht ein Verschlusselement nach einer zweiten Ausführungsform der Erfindung,
- Figur 9: in Schnittansicht ein Verschlusselement nach einer dritten Ausführungsform der Erfindung,
- Figur 10: in Schnittansicht ein Verschlusselement nach einer vierten Ausführungsform der Erfindung und
- Figur 11: in Schnittansicht einen Verschlussbolzen nach einer weiteren Ausführungsform der Erfindung.

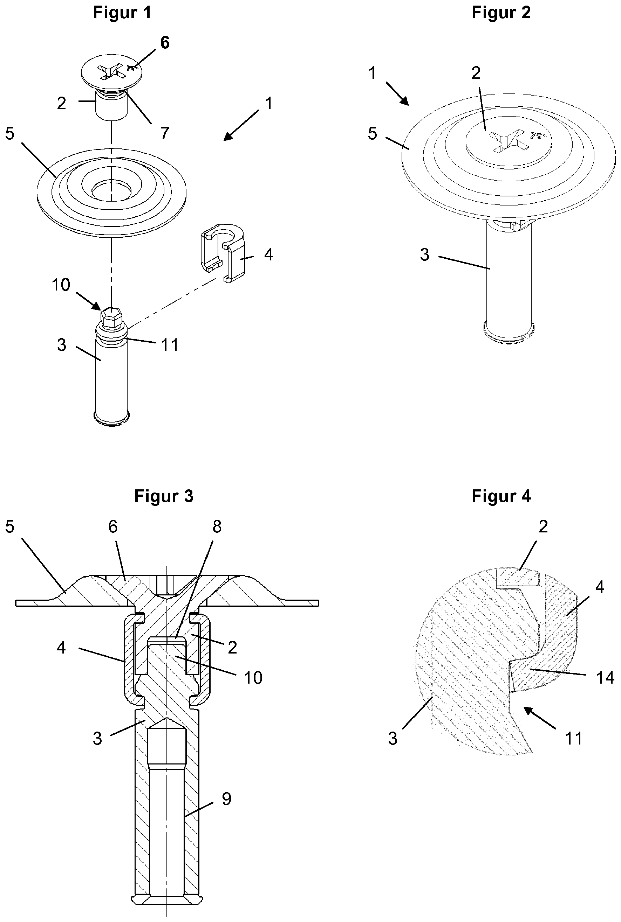

Der in Figur 1 dargestellte Verschlussbolzen 1 weist im Wesentlichen drei Bauteile auf, nämlich ein erstes, in Figur 1 oberes Zapfenelement 2, ein zweites, in Figur 1 unteres Zapfenelement 3 und eine Klammer 4 zum Verbinden der beiden Zapfenelemente 2, 3. Zusätzlich ist in Figur 1 eine Scheibe 5 dargestellt, welche ähnlich einer Unterlegscheibe zusammen mit dem Verschlussbolzen 1 verwendet werden kann.

Wie auch aus der Schnittansicht der Figur 3 ersichtlich ist, ist an dem ersten Zapfenelement 2 ein Kopf 6 ausgebildet, dessen Durchmesser größer als der des übrigen Zapfenelements 2 ist. In der dargestellten Ausführungsform ist die in den Figuren 1 und 3 untere Seite des Kopfes 6 konisch ausgebildet, wobei auch die Scheibe 5 mit einer entsprechend gestalteten Kontur versehen ist, an welcher sich der Kopf 6 abstützen kann. Alternativ können die untere Seite des Kopfes 6 und die Scheibe 5 jeweils als eine Kalotte ausgebildet sein, damit sich der Kopf 6 schwenkbar abstützen kann.

Weiter sind in dem Kopf 6 Angriffsmittel für ein Werkzeug, nämlich in der dargestellten Ausführungsform kreuzförmige Schlitze, vorgesehen. In Figur 3 unterhalb des Kopfes 6 ist das erste Zapfenelement 2 mit einer umlaufenden Nut 7 versehen. Weiter weist das erste Zapfenelement 2 eine in Figur 3 untere zentrale Öffnung 8 auf.

Das zweite Zapfenelement 3 ist in der dargestellten Ausführungsform als eine Hülse mit einem Innengewinde 9 zur Verbindung mit einem Bauteil mit Außengewinde ausgebildet. Ein in den Figuren oberer Verbindungsbereich 10 des zweiten Zapfenelements 3 hat eine nicht rotationssymmetrische Außenkontur. In der dargestellten Ausführungsform ist der Verbindungsbereich 10 als ein Sechskant ausgebildet. Entsprechend ist die Innenkontur der Öffnung 8 des ersten Zapfenelements 2 ebenfalls sechseckig gestaltet, so dass der Verbindungsbereich 10 drehfest in die Öffnung 8 eingesteckt werden kann. In der in Figur 3 gezeigten montierten Position ist das erste Zapfenelement 2 damit nicht relativ zu dem zweiten Zapfenelement 3 drehbar.

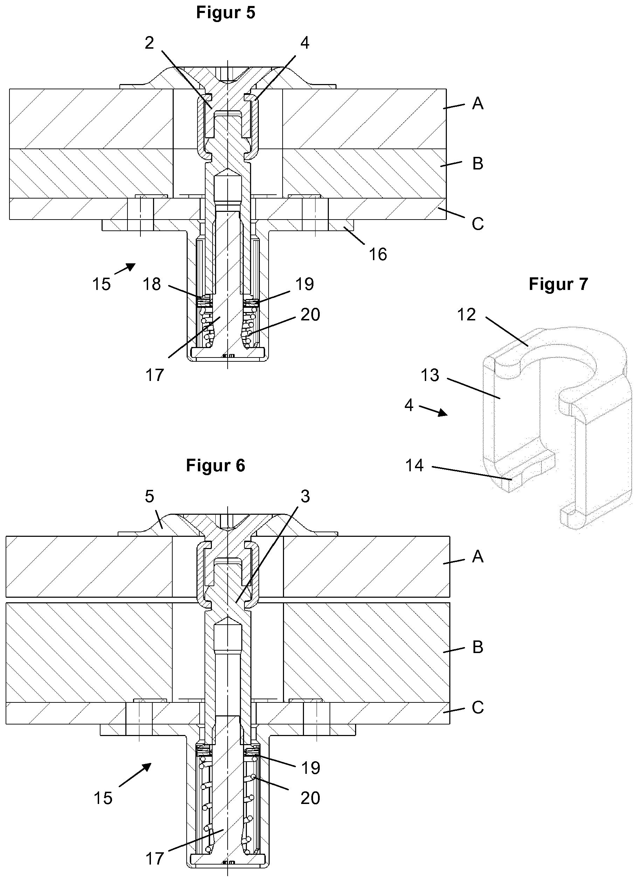

In axialer Richtung, d.h. in Richtung der in den Figuren 1 und 3 gestrichelt dargestellten Längsachse, ist das erste Zapfenelement 2 mittels der Klammer 4 an dem zweiten Zapfenelement 3 befestigt. Hierzu weist auch das zweite Zapfenelement 3 eine umlaufende Nut 11 auf. Wie in der vergrößerten Darstellung der Figur 7 gezeigt ist, hat die Klammer 4 einen in den Figuren oberen Kragen 12, der eine Öffnung zum Aufstecken der Klammer 4 auf das erste Zapfenelement 2 aufweist. Der Kragen 12 kann dabei so gestaltet sein, dass die Klammer 4 auf das erste Zapfenelement 2 aufgerastet werden kann. Von dem Kragen 12 aus erstrecken sich in Figur 7 nach unten zwei Arme 13, an deren unteren Enden jeweils ein radial nach innen ragender Haltevorsprung 14 ausgebildet ist. Die Haltevorsprünge 14 greifen dabei jeweils in die Nut 11 des zweiten Zapfenelements 3 ein.

In der vergrößerten Schnittansicht der Figur 4 ist erkennbar, dass die Haltevorsprünge 4 und/oder die Außenkontur des zweiten Zapfenelements 3 im Bereich der Nut 11 so abgeschrägt ausgebildet sind, dass die Klammer 4 aus der Nut 11 ausrasten kann, wenn eine ausreichend große Zugbelastung zwischen dem ersten Zapfenelement 2 und dem zweiten Zapfenelement 3 wirkt. Durch die Gestaltung des Haltevorsprungs 14 und der Außenkontur des zweiten Zapfenelements 3 im Bereich der Nut 11 kann die erforderliche Axialkraft, bei welcher die Haltevorsprünge 14 aus der Nut 11 ausrasten, definiert eingestellt werden. Hierfür ist auch die Steifigkeit des Materials der Klammer 14 maßgebend.

Wenn die Komponenten des Verschlussbolzens 1 wie in den Figuren 2 und 3 gezeigt miteinander verbunden sind, wirkt der Verschiussboizen bis zum Erreichen der Axialkraft, bei welcher die Klammer 4 aus der Nut 11 ausrastet, wie ein einstückiges Bauteil, d.h. es können sowohl ein Drehmoment als auch eine Axialkraft durch den Verschlussbolzen 1 übertragen werden.

Ein erstes Anwendungsbeispiel des Verschlussbolzens 1 zur Verbindung dreier plattenförmiger Bauteile A, B, C ist in den Figuren 5 und 6 dargestellt. Figur 6 zeigt das Verschlusselement dabei zu Beginn des Befestigungsvorgangs, während Figur 5 den Zustand zeigt, in welchem die Bauteile A, B, C miteinander verspannt sind. In der dargestellten Ausführungsform ist das zwischen dem plattenartigen Bauteilen A und C angeordnete Bauteil B komprimierbar ausgestaltet, so dass die Höhe des Bauteils B in Figur 5 kleiner als in Figur 6 dargestellt ist. Zudem ist in Figur 6 ein Luftspalt zwischen den Bauteilen A und B vorhanden.

Der in den Figuren 1 bis 4 gezeigte Verschlussbolzen 1 wird zur Verbindung der Bauteile A, B, C in eine Durchgangsöffnung der Bauteile A und B gesteckt, wobei die Scheibe 5 den Kopf 6 an dem Bauteil A abstützt. Auch in dem Bauteil C ist eine Durchgangsöffnung vorgesehen, durch welche sich das zweite Zapfenelement 3 des Verschlussbolzens 1 erstreckt. Zudem ist an dem Bauteil C ein Befestigungselement 15 zur Verbindung mit dem Verschlussbolzen 1 festgelegt.

Das Befestigungselement 15 weist hierzu zunächst ein Gehäuse 16 auf, das mit dem Bauteil C fest verbunden ist. Ein Gewindebolzen (Haltenockenschraube) 17 mit Außengewinde ist in dem Gehäuse 16 festgelegt und erstreckt sich in den Figuren nach oben, so dass das Innengewinde 9 des zweiten Zapfenelements 3 auf dem Gewindebolzen 17 aufgeschraubt werden kann. In den Figuren 5 und 6 ist in dem Befestigungselement 15 zusätzlich eine Sicherung gegen Öffnen der Gewindeverbindung, bspw. in Folge von Vibrationen, gezeigt. Hierzu ist das in den Figuren untere Ende des zweiten Zapfenelements 3 drehfest mit einer profilierten Scheibe 18 verbunden, die frei drehbar in dem Gehäuse 16 geführt ist. Eine ähnlich profilierte Scheibe 19 ist verdrehsicher und axial verschiebbar in dem Gehäuse 16 geführt, wobei die Scheiben 18 und 19 nicht relativ zueinander verdreht werden können, wenn deren Profilierungen ineinander greifen. Die Scheibe 19 stützt sich zudem an einer Feder 20 ab, die so vorgespannt ist, dass die Scheiben 18 und 19 gegeneinander und gegen das in den Figuren untere Ende des Verschlussbolzens 1 gedrückt werden. In dem in Figur 6 gezeigten Zustand lässt sich der Verschlussbolzen 1 dabei noch relativ zu dem Gehäuse 16 drehen, wobei die Profilierungen der Scheiben 18 und 19 übereinander rasten. Hierbei werden die Scheiben 18 und 19 gegen die Kraft der Feder 20 voneinander abgehoben. In der in Figur 5 gezeigten Position verhindert die Vorspannung der Feder 20 jedoch, dass sich die Scheiben 18 und 19 in Folge von Vibrationen relativ zueinander bewegen, so dass sich die Verschraubung des Verschlussbolzens 1 auf den Gewindebolzen 17 nicht selbsttätig lösen kann.

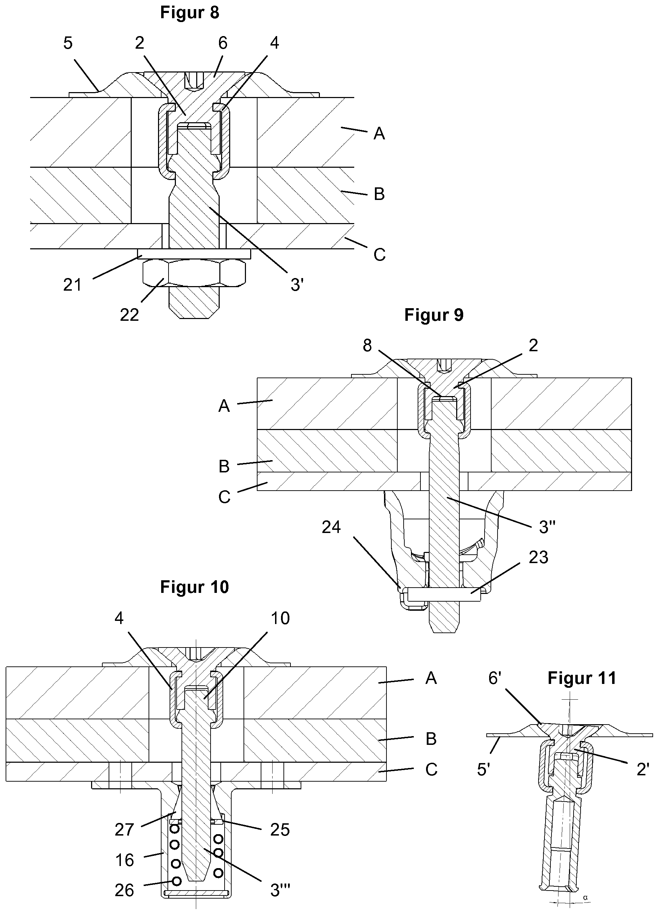

Eine zweite Ausführungsform ist in Figur 8 gezeigt, wobei wiederum die drei Bauteile A, B und C über ein erfindungsgemäßes Verschlusselement miteinander verbunden werden. Der Verschlussbolzen 1 ist dabei ähnlich wie in der zuvor beschriebenen Ausführungsform ausgebildet, d.h. mit dem ersten Zapfenelement 2, der Klammer 4 und einem zweiten Zapfenelement 3', welches in der in Figur 8 gezeigten Ausführungsform ein Außengewinde aufweist. Der Verbindungsbereich 10 sowie die Nut 11 sind dagegen wie zuvor beschrieben aufgebaut. Eine Scheibe 21 und eine Mutter 22 bilden zusammen ein Befestigungselement, um den Verschlussbolzen 1 mit den Bauteilen A, B und C zu verspannen.

Auch in der Ausführungsform nach Figur 9 sind das erste Zapfenelement 2 und die Klammer 4 wie oben beschrieben ausgebildet. Im Vergleich zu Figur 8 fällt auf, dass das zweite Zapfenelement 3" als ein länglicher Stift ausgebildet ist, der an seinem in Figur 9 unteren Ende einen sich quer hierzu erstreckenden Kreuzstift 23 aufweist. Als Befestigungselement für den Verschlussbolzen 1 dient eine Nockenkontur 24, die sich auf der in Figur 9 unteren Seite des Bauteils C abstützt. Die Nockenkontur 24 kann ähnlich wie in der US 2,368,713 oder der US 2,378,122 beschrieben mit einer Rampe und einem gegenüber dieser zurückgesetzten Haltebereich ausgebildet sein, in welcher der Kreuzstift 23 einrasten kann, um den Verriegelungsbolzen 1 an der Nockenkontur 24 festzulegen.

Die in Figur 10 gezeigte vierte Ausführungsform des Verschlusselements zeigt einen Verriegelungsbolzen 1, bei dem das zweite Zapfenelement 3'" als ein Stift mit einem Außengewinde ausgebildet ist. Das Befestigungselement weist ein ähnlich wie unter Bezugnahme auf die Figuren 5 und 6 beschriebenes Gehäuse 16 auf, in welchem eine Scheibe 25 geführt ist, die von einer Feder 26 in Figur 10 nach oben beaufschlagt wird. Oberhalb der Scheibe 25 sind konische Muttersegmente 27 angeordnet, die sich an einer entsprechenden konischen Gegenfläche des Gehäuses 16 abstützen. Wenn der Verschlussbolzen 1 in die Öffnungen der Bauteile A, B, C und in das Befestigungselement eingeführt wird, drängt der Verschlussbolzen 1 die einzelnen Segmente 27 der Mutter gegen die Kraft der Feder 26 in Figur 10 nach unten, wodurch der Verschlussbolzen 1 durch die aufgeweitete Mutter gesteckt werden kann. Beim Festziehen des Verschlussbolzens 1 wird die durch die Segmente 27 gebildete Mutter dagegen unterstützt durch die Feder 26 wieder in den Konus des Gehäuses 16 gedrängt und presst sich somit radial gegen das Außengewinde des zweiten Zapfenelements 3"', wodurch eine Gewindeverbindung mit dem Verschlussbolzen 1 entsteht.

In Figur 11 ist eine weitere Ausführungsform eines Verschlussbolzens dargestellt, bei welchem der Kopf 6' des oberen Zapfenelements 2' z.B. gegenüber der Ausführungsform nach Figur 3 modifiziert ist. Statt der konischen Kontur an der Unterseite des Kopfes 6 und an der entsprechenden Gegenkontur der Scheibe 5 ist eine kalottenartige bzw. gerundete Ausgestaltung vorgesehen, die es dem Zapfenelement 2' ermöglicht, relativ zu der Scheibe 5' verschwenkt zu werden. Dies ist als Ausgleich sinnvoll, wenn die Achsflucht zwischen der Scheibe 5' und dem Zapfenelement 2' wie in Figur 11 angedeutet nicht ideal erfüllt ist. Ohne die kalottenartige Kontur würde dies zu einer Biegebeanspruchung führen die in dem Verschlussbolzen unerwünscht ist und insbesondere auch Einfluss auf das Auslöseverhalten der Klammer 4 hätte.

Auch die Verschlusselemente nach den Figuren 8 bis 10 können mit dem modifizierten Verschlussbolzen nach Figur 11 versehen werden.

**Bezugszeichen**

| | | | |
|---|---|---|---|
| 1 | Verschlussbolzen | 17 | Gewindebolzen |
| 2, 2' | erstes Zapfenelement | 18 | Scheibe |
| 3, 3', 3", 3'" | zweites Zapfenelement | 19 | Scheibe |
| 4 | Klammer | 20 | Feder |
| 5, 5' | Scheibe | 21 | Scheibe |
| 6, 6' | Kopf | 22 | Mutter |
| 7 | Nut | 23 | Kreuzstift |
| 8 | Öffnung | 24 | Nockenkontur |
| 9 | Innengewinde | 25 | Scheibe |
| 10 | Verbindungsbereich | 26 | Feder |
| 11 | Nut | 27 | Muttersegment |
| 12 | Kragen | | |
| 13 | Arm | | |
| 14 | Haltevorsprung | A | Bauteil |
| 15 | Befestigungselement | B | Bauteil |
| 16 | Gehäuse | C | Bauteil |

## Patentansprüche

1. Verschlussbolzen mit einem Zapfen, der Verriegelungsmittel (9; 23) und Rückhaltemittel (6) aufweist, wobei der Zapfen wenigstens zwei separate Zapfenelemente (2, 2'; 3, 3', 3", 3"') aufweist, von denen eines die Verriegelungsmittel (9; 23) und das andere die Rückhaltemittel (6, 6') aufweist, und wobei die wenigstens zwei Zapfenelemente (2, 2'; 3, 3', 3", 3"') drehfest miteinander verbunden sind, **dadurch gekennzeichnet, dass** die wenigstens zwei Zapfenelemente (2, 2'; 3, 3', 3", 3"') mittels einer lösbaren Klammer (4) in axialer Richtung lösbar miteinander verbunden sind.

2. Verschlussbolzen nach Anspruch 1, **dadurch gekennzeichnet, dass** die Klammer (4) einen Kragen (12) mit einer Öffnung zum Aufstecken auf das erste Zapfenelement (2) und zwei sich von dem Kragen (12) erstreckende Arme (13) aufweist, an deren Enden jeweils ein radial nach innen ragender Haltevorsprung (14) ausgebildet ist.

3. Verschlussbolzen nach Anspruch 2, **dadurch gekennzeichnet, dass** die Klammer (4) derart mit den Zapfenelementen (2, 2'; 3, 3', 3", 3'") verbunden ist, dass diese bei Überschreiten einer in axialer Richtung auf die wenigstens zwei Zapfenelemente (2, 2'; 3, 3', 3", 3"') wirkenden Kraft sich selbsttätig von wenigstens einem der Zapfenelemente (2, 2'; 3, 3', 3", 3"') löst.

4. Verschlussbolzen nach Anspruch 2 oder 3, **dadurch gekennzeichnet, dass** jedes der wenigstens zwei Zapfenelemente (2, 2'; 3, 3', 3", 3"') eine Nut (7; 11) aufweist, in welche jeweils ein radial nach innen gerichteter Abschnitt (12; 14) der Klammer (4) eingreift.

5. Verschlussbolzen nach einem der vorhergehenden Ansprüche, **dadurch gekennzeichnet, dass** die wenigstens zwei Zapfenelemente (2, 2'; 3, 3', 3", 3"') zur drehfesten Verbindung jeweils nicht rotationssymmetrische Verbindungsbereiche (8; 10) aufweisen.

6. Verschlussbolzen nach einem der vorhergehenden Ansprüche, **dadurch gekennzeichnet, dass** die Verriegelungsmittel ein Gewinde (9) umfassen.

7. Verschlussbolzen nach einem der vorhergehenden Ansprüche, **dadurch gekennzeichnet, dass** die Verriegelungsmittel einen Kreuzstift (23) umfassen.

8. Verschlussbolzen nach einem der vorhergehenden Ansprüche, **dadurch gekennzeichnet, dass** ein Zapfenelement (3) wenigstens abschnittsweise hohl ist.

9. Verschlusselement zur Verbindung von Bauteilen (A, B, C) mit einem Verschlussbolzen (1) nach einem der vorhergehenden Ansprüche und einem mit diesem verbindbaren Befestigungselement (15; 22; 24; 27).

10. Verschlusselement nach Anspruch 9, **dadurch gekennzeichnet, dass** der Verschlussbolzen (1) eine Schraube mit einem Außengewinde ist, und dass das Befestigungselement eine Mutter (22; 27) mit einem Innengewinde ist.

11. Verschlusselement nach Anspruch 9, **dadurch gekennzeichnet, dass** der Verschlussbolzen (1) auf einer Seite einen Kopf (6, 6') und auf der gegenüberliegenden Seite einen Kreuzstift (23) aufweist, wobei das Befestigungselement eine Nockenkontur (24) mit einer Rampe und einem gegenüber dieser zurückgesetzten Haltebereich aufweist.

12. Verschlusselement nach Anspruch 9, **dadurch gekennzeichnet, dass** das Befestigungselement ein Gehäuse (16) mit einem Konus und einer in dem Gehäuse (16) aufgenommenen geteilten Mutter (27) aufweist, wobei die Segmente der Mutter (27) gegen die Kraft eines Federelements (26) axial relativ zu dem Konus verschiebbar sind.

13. Verschlusselement nach Anspruch 9, **dadurch gekennzeichnet, dass** der Verschlussbolzen (1) auf einer Seite einen Kopf (6, 6') und auf der gegenüberliegenden Seite eine zentrale Öffnung mit einem Innengewinde (9) aufweist, wobei das Befestigungselement (15) ein Gehäuse (16) mit einer darin drehfesten Haltenockenschraube (17) mit Außengewinde und ggf. eine Ratschenanordnung aufweist.

14. Verschlusselement nach einem der Ansprüche 9 bis 13, das zusätzlich eine Scheibe (5, 5') zum Abstützen eines Kopfes (6, 6') des Verschlussbolzens (1) aufweist, **dadurch gekennzeichnet, dass** die Unterseite des Kopfes (6') und die entsprechende Gegenkontur der Scheibe (5') kalottenförmig gestaltet ist.

## Claims

1. A fastener bolt with a peg, comprising locking means (9; 23) and retaining means (6), wherein the peg has at least two separate peg elements (2, 2'; 3, 3', 3", 3"') of which one comprises the locking means (9; 23) and the other the retaining means (6, 6') and wherein the at least two peg elements (2, 2'; 3, 3', 3", 3''') are connected to each other in a co-rotationally fixed manner, **characterised in that** the at least two peg elements (2, 2'; 3, 3', 3", 3"') are connected to each other in the axial direction by means of a detachable clip (4).

2. The fastener bolt according to claim 1, **characterised in that** the clip (4) has a collar (12) with an opening for mounting on the first peg element (2) and two arms (13) extending from the collar (12) at the ends of which a holding projection (14) protruding radially inwards is formed.

3. The fastener bolt according to claim 2, **characterised in that** the clip (4) is connected to the peg elements (2, 2'; 3, 3' , 3", 3"') in such a way that on exceeding of a force acting in the axial direction on the at least two peg elements (2, 2',; 3, 3', 3", 3"') it automatically detaches itself from at least one of the peg elements (2, 2'; 3, 3', 3", 3"').

4. The fastener bolt according to claim 2 or 3, **characterised in that** each of the at least two peg elements (2, 2' ; 3, 3' , 3", 3"') has a groove (7; 11) into which a radially inwardly directed section (12; 14) of the clip (4) engages.

5. The fastener bolt according to any one of the preceding claims, **characterised in that** for the co-rotationally fixed connection the at least two peg elements (2, 2'; 3, 3', 3", 3"') have non-rotationally symmetrical connection areas (8; 10).

6. The fastener bolt according to any one of the preceding claims, **characterised in that** the locking means have a thread (9).

7. The fastener blot according to any one of the preceding claims, **characterised in that** locking means have a cross pin (23).

8. The fastener bolt according to any one of the preceding claims, **characterised in that** one peg element (3) is hollow at least in sections.

9. A fastener element for the connection of components (A, B, C) with a fastener bolt (1) according to any one of the preceding claims and a fastening element (15; 22; 24; 27) connectable therewith.

10. The fastener element according to claim 9, **characterised in that** the fastener bolt (1) is a screw with an external thread and the fastening element is a nut (22; 27) with an internal thread.

11. The fastener element according to claim 9, **characterised in that** the fastener bolt (1) has a head (6, 6") at one side and on the opposite side has a cross pin (23), wherein the fastening element has a cam contour (24) with a ramp and opposite this a set-back holding area.

12. The fastener element according to claim 9, **characterised in that** the fastening element comprises a housing (16) with a cone and a split nut (27) accommodated in the housing (16), wherein the segments of the nut (27) are axially displaceable relative to the cone against the force of a spring element (26).

13. The fastener element according to claim 9, **characterised in that** on one side the fastener bolt (1) has a head (6, 6') and on the opposite side a central opening with an internal thread (9), wherein the fastening element (15) comprises a housing (16) within which there is a co-rotationally fixed retaining cam screw (17) with an external thread and, possibly, a ratchet device.

14. The fastener element according to any one of claim 9, to 13 which also comprises a disk (5, 5') for supporting a head (6, 6') of the fastener bolt (1) **characterised in that** the underside of the head (6') and the corresponding counter-contour of the disk (5') is dome-shaped.

## Revendications

1. Boulon de blocage comportant un tourillon qui présente des moyens de blocage (9 ; 23) et des moyens de retenue (6), le tourillon présentant au moins deux éléments de tourillon séparés (2, 2' ; 3, 3', 3", 3'") dont l'un présente les moyens de blocage (9 ; 23) et l'autre les moyens de retenue (6, 6'), les deux éléments de tourillon (2, 2' ; 3, 3', 3", 3'") étant raccordés l'un à l'autre de manière fixe en rotation, **caractérisé en ce que** les au moins deux éléments de taurillon (2, 2' ; 3, 3', 3", 3'") éléments de tourillon sont raccordés entre eux au moyen d'une attache dissociable (4) dans le sens axial.

2. Boulon de blocage selon la revendication 1, **caractérisé en ce que** l'attache (4) présente une collerette (12) dotée d'une ouverture pour poser le premier élément de tourillon (2) et deux bras (13) s'étendant depuis la collerette (12) aux extrémités desquels est respectivement constituée une saillie de retenue (14) dépassant radialement vers l'intérieur.

3. Boulon de blocage selon la revendication 2, **caractérisé en ce que** l'attache (4) est raccordée aux éléments de tourillon (2, 2' ; 3, 3', 3", 3'") de manière à ce que ceux-ci, en cas de dépassement d'une force agissant dans le sens axial sur les au moins deux éléments de tourillon (2, 2' ; 3, 3', 3", 3"'), se détachent automatiquement d'au moins un des éléments de tourillon (2, 2' ; 3, 3', 3", 3"').

4. Boulon de blocage selon la revendication 2 ou 3, **caractérisé en ce que** chacun des moins deux éléments de tourillon (2, 2' ; 3, 3', 3", 3"') présente une rainure (7 ; 11) dans laquelle s'engrène respectivement une section (12 ; 14) dirigée radialement vers l'intérieur de l'attache (4).

5. Boulon de blocage selon une des revendications précédentes, **caractérisé en ce que** les au moins deux éléments de tourillon (2, 2' ; 3, 3', 3", 3'") présentent, pour un raccordement fixe en rotation, des zones de raccordement (8 ; 10) respectivement non symétriques en rotation.

6. Boulon de blocage selon une des revendications précédentes, **caractérisé en ce que** les moyens de blocage comprennent un filetage (9).

7. Boulon de blocage selon une des revendications précédentes, **caractérisé en ce que** les moyens de blocage comprennent une tige en croix (23).

8. Boulon de blocage selon une des revendications précédentes, **caractérisé en ce qu'**un élément de tourillon (3) est creux au moins par sections.

9. Éléments de blocage pour le raccordement de pièces (A, B, C) comportant un boulon de blocage (1) selon une des revendications précédentes et un élément de fixation pouvant être raccordé à celui-ci (15 ; 22 ; 24 ; 27).

10. Élément de blocage selon la revendication 9, **caractérisé en ce que** le boulon de blocage (1) est une vis dotée d'un filetage extérieur et que l'élément de fixation est un écrou (22 ; 27) doté d'un filetage intérieur.

11. Élément de blocage selon la revendication 9, **caractérisé en ce que** le boulon de blocage (1) présente d'un côté une tête (6, 6') et du côté opposé une tige en croix (23), l'élément de fixation présentant un contour de came (24) avec une rampe et une zone de retenue en retrait par rapport à celle-ci.

12. Élément de blocage selon la revendication 9, **caractérisé en ce que** l'élément de fixation présente un boîtier (16) comportant un cône et un écrou divisé (27) reçu dans le boîtier (16), les segments de l'écrou (27) étant déplaçables axialement par rapport au cône à l'encontre de la force d'un élément à ressort (26).

13. Élément de blocage selon la revendication 9, **caractérisé en ce que** le boulon de blocage (1) présente d'un côté une tête (6, 6') et du côté opposé une ouverture centrale dotée d'un filetage intérieur (9), l'élément de fixation (15) présentant un boîtier (16) avec une vis de came de retenue fixe en rotation à l'intérieur (17) et dotée d'un filetage extérieur et éventuellement un système de cliquet.

14. Élément de blocage selon une des revendications 9 à 13, qui présente en outre une rondelle (5, 5') pour supporter une tête (6, 6') du boulon de blocage (1), **caractérisé en ce que** le dessous de la tête (6') et le contour conjugué correspondant de la rondelle (5') ont une forme de calotte.
